# EUROPEAN PATENT SPECIFICATION

(11) **EP 3 064 380 B1**
(45) Date of publication and mention of the grant of the patent: **08.07.2020**
(21) Application number: 14857675.4
(22) Date of filing: 02.06.2014
(51) Int. Cl.: B60C 17/00, B60C 9/28, B60C 9/20

(54) **RUN-FLAT RADIAL TIRE**
NOTLAUFRADIALREIFEN
PNEU RADIAL À ROULAGE À PLAT

(30) Priority: 28.10.2013 JP 2013223382
(43) Date of publication of application: 07.09.2016
(73) Proprietor: Bridgestone Corporation, Tokyo 104-8340 (JP)
(72) Inventor: OGAWA, Gaku, Tokyo 104-8340 (JP)
(74) Representative: Oxley, Robin John George
(86) International application number: PCT/JP2014/064653
(87) International publication number: WO 2015/064136

(56) References cited:
- JP-A- 2001 063 324
- JP-A- 2001 063 324
- JP-A- 2002 301 915
- JP-A- 2002 301 915
- JP-A- 2004 017 668

## Description

### Technical Field

The present invention relates to a run-flat radial tire.

### Background Art

As a run-flat tire capable of running a specific distance even in a state in which the tire has been punctured and the internal pressure has dropped, Japanese Patent Application Laid-Open (JP-A) No. 2012-116212 describes a side reinforcement type of run-flat tire in which tire side portions are reinforced with side reinforcement rubber. Attention is also drawn to the disclosures of JP 2001-063324A, JP 2004-017668A and JP 2002-301915A, which also disclose run flat tires in which tire side portions are reinforced with side reinforcement rubber. JP 2001-063324A further discloses an annular member that reinforces the shoulder portion of the tire.

### SUMMARY OF INVENTION

### Technical Problem

However, in a side reinforcement type of run-flat radial tire, in cases in which a slip angle (SA) is input such as by vehicle turning during running in a state of reduced internal pressure (during run-flat running), a buckling phenomenon sometimes occurs in which a tire side portion bends by folding in toward the tire inside.

In consideration of the above circumstances, an object of the present invention is to provide a run-flat radial tire capable of suppressing a buckling phenomenon from occurring in a tire side portion during run-flat running.

### Solution to Problem

A run-flat radial tire according to a first aspect of the present invention is defined by claim 1.

### Advantageous Effects of Invention

Due to adopting the above configuration, the present invention enables a buckling phenomenon to be suppressed from occurring in a tire side portion during run-flat running.

### BRIEF DESCRIPTION OF DRAWINGS

Fig. 1 is a half cross-section illustrating one side of a cross-section of a run-flat radial tire according to an exemplary embodiment of the present invention, sectioned along a tire axial direction.
Fig. 2 is a cross-section illustrating a state during run-flat running of a run-flat radial tire according to an exemplary embodiment of the present invention, sectioned along the tire axial direction.
Fig. 3 is a side view of a run-flat radial tire of a Comparative Example during run-flat running, as viewed along the tire axial direction.
Fig. 4 is a graph illustrating a relationship between a rim detachment index at a vehicle turn inside, and a rim detachment index at a vehicle turn outside.

### DESCRIPTION OF EMBODIMENTS

### Run-Flat Radial Tire 10 Configuration

Explanation follows regarding a run-flat radial tire 10 (hereinafter referred to as "tire 10") according to an exemplary embodiment of the present invention, with reference to the drawings. In the drawings, the arrow TW indicates a width direction of the tire 10 (a tire width direction), and the arrow TR indicates a radial direction of the tire 10 (a tire radial direction). The tire width direction referred to here means a direction parallel to the rotation axis of the tire 10, and is also referred to as the tire axial direction. The tire radial direction is a direction orthogonal to the rotation axis of the tire 10. The label CL indicates an equatorial plane of the tire 10 (a tire equatorial plane). Moreover, in the present exemplary embodiment, the rotation axis side of the tire 10 along the tire radial direction is referred to as the "tire radial direction inside", and the opposite side to the rotation axis of the tire 10 along the tire radial direction is referred to as the "tire radial direction outside". The equatorial plane CL side of the tire 10 along the tire width direction is referred to as the "tire width direction inside", and the opposite side to the equatorial plane CL of the tire 10 along the tire width direction is referred to as the "tire width direction outside".

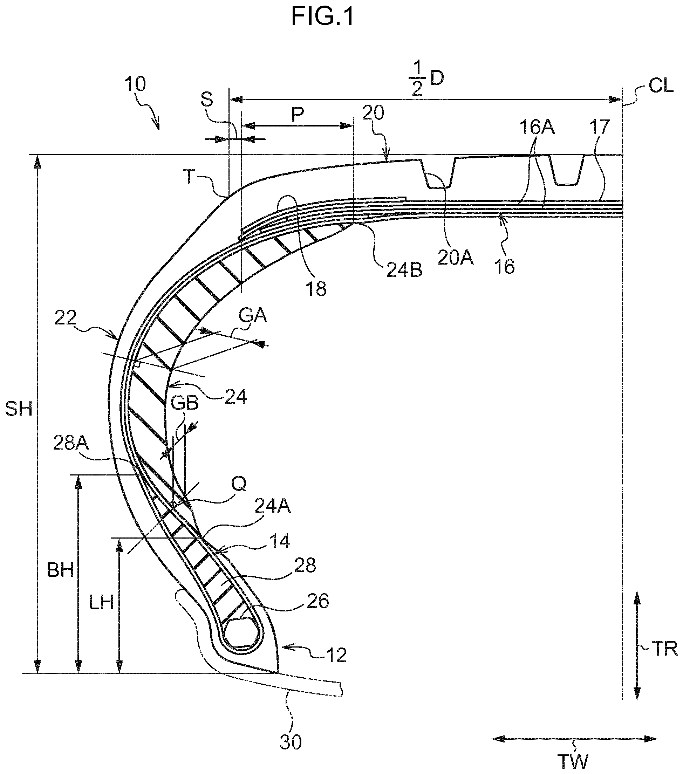

Fig. 1 illustrates the tire 10 mounted to a standard rim 30 (illustrated by the double-dash intermittent lines in Fig. 1) when inflated to a standard air pressure. The standard rim referred to here is a rim specified in the 2013 edition of Year Book of the Japan Automobile Tire Manufactures Association (JATMA). The above standard air pressure is the air pressure corresponding to the maximum load capacity in the 2013 edition of the Year Book of the Japan Automobile Tire Manufactures Association (JATMA).

Note that in the following explanation, loading is to the maximum load (maximum load capacity) for a single wheel of the appropriate size as listed in the following Standards. The internal pressure is the air pressure corresponding the maximum load (maximum load capacity) for a single wheel listed in the following Standards. Moreover, the rim is a standard rim (or "Approved Rim", "Recommended Rim") of the appropriate size as listed in the following Standards. The Standard is determined according to current Industrial Standards prevailing in the region of tire manufacture or use. For example, as stipulated in "The Year Book of the Tire and Rim Association Inc." in the United States of America, in "The Standards Manual of the European Tire and Rim Technical Organization" in Europe, and in "The JATMA Year Book" of the Japan Automobile Tire Manufactures Association in Japan.

As illustrated in Fig. 1, the tire 10 according to the present exemplary embodiment principally includes a pair of bead portions 12, a carcass 14 having a toroidal shape and spanning between the pair of bead portions 12, an inclined belt layer 16, a cap layer 17, and a reinforcement cord layer 18 that are provided further to the tire radial direction outside than the carcass 14, a tread portion 20 that is provided further to the radial direction outside than the inclined belt layer 16 and the reinforcement cord layer 18, tire side portions 22 respectively coupling the bead portions 12 and the tread portion 20 together, and side reinforcement rubber 24 serving as a side reinforcement layer provided to each of the tire side portions 22. In a state in which the tire 10 is fitted to the standard rim 30 with an internal pressure of the standard air pressure, the length of 1/2 the difference between the tire outside diameter and the rim diameter is taken as a section height SH (tire cross-section height). The tire 10 in Fig. 1 has the section height SH set at 115 mm, or greater, and, as an example in the present exemplary embodiment, the section height SH is set to 129 mm. Note that there is no limitation thereto, and the tire may be one in which the section height SH is less than 115 mm.

The bead portions 12 are provided as a left and right pair, spaced apart from each other at a spacing in the tire width direction (Fig. 1 illustrates the bead portion 12 on one side alone). Bead cores 26 are respectively embedded in the pair of bead portions 12, and the carcass 14 spans between the bead cores 26.

The carcass 14 is configured including a single or plural carcass plies. The carcass plies are formed by covering plural strands of cord (for example, organic fiber cord or metal cord) with a covering rubber. The carcass 14 formed in this manner configures a tire frame extending in a toroidal shape from one of the bead cores 26 to the other of the bead cores 26. One end and the other end of the carcass 14 each fold back around the respective bead core 26, from the tire inside to the tire outside, so as to extend as far as the tread portion 20, described later. In the present exemplary embodiment, the one end and the other end of the carcass 14 each fold back around the respective bead core 26 and are anchored; however, there is no limitation thereto. For example, a configuration may be adopted in which plural bead core pieces are disposed in the bead portions 12, and the carcass 14 is tucked between the plural bead core pieces.

A bead filler 28 extending from the respective bead core 26 toward the tire radial direction outside is embedded in respective regions of the bead portions 12 sandwiched between the carcass 14. An end portion 28A of the bead filler 28 on the radial direction outside enters into the tire side portion 22, and a thickness of the bead filler 28 decreases toward the tire radial direction outside.

In a state in which the tire 10 is fitted to the standard rim 30 at an internal pressure of the standard air pressure, a height BH from the respective end portion 28A at the tire radial direction outside of the bead filler 28 to the leading end of the bead portion 12 is set within a range of from 30% to 50% of the section height SH. In cases in which the height BH of the bead filler 28 is less than 30% of the section height SH, there is the possibility of not being able to secure sufficient durability during run-flat running. Moreover, in cases in which the height BH of the bead filler 28 is greater than 50% of the section height SH, there is the possibility of a deterioration in ride comfort. Thus due to the above, BH is preferably set within a range of from 30% to 50% of the section height SH.

The inclined belt layer 16 is laid up at the tire radial direction outside of the carcass 14. The inclined belt layer 16 is configured from a single or plural belt plies 16A. As an example in the present exemplary embodiment, the inclined belt layer 16 is configured by two belt plies 16A. The belt plies 16A are formed by covering plural strands of cord (for example, organic fiber cord or metal cord) in a coating rubber. The cords configuring the belt plies 16A are laid up inclined to the tire circumferential direction, with an angle inclination of from 15 degrees to 30 degrees. As an example in the present exemplary embodiment, layup is made with an angle of inclination of 26 degrees. The inclined belt layer 16 is formed so as to span from one end portion to the other end portion of the tread portion 20 in the tire width direction.

The cap layer 17 is laid up at the tire radial direction outside of the inclined belt layer 16. The cap layer 17 covers the inclined belt layer 16 entirely, and the reinforcement cord layer 18 is laid up at the tire radial direction outside of the cap layer 17. As an example in the present exemplary embodiment, the reinforcement cord layer 18 is formed at both ends of the tread portion 20 (one of the reinforcement cord layers 18 alone is illustrated in Fig. 1).

The reinforcement cord layer 18 is configured including plural strands of cord, and is formed such that the cord is inclined to the tire circumferential direction at an angle of inclination of from 60 degrees to 90 degrees. As an example in the present exemplary embodiment, the cords are inclined with an angle of inclination of 90 degrees. Organic fiber cord or metal cord may be employed as the cord for forming the reinforcement cord layer 18. PET is employed as an example in the present exemplary embodiment.

The tread portion 20 is provided at the tire radial direction outside of the inclined belt layer 16, the cap layer 17, and the reinforcement cord layer 18. The tread portion 20 is a location that makes contact with the road surface when running, and circumferential direction grooves 20A extending along the tire circumferential direction are formed in the surface of the tread portion 20. Width direction grooves, not illustrated in the drawings, are also formed in the tread portion 20 extending along the tire width direction. The shape and number of the circumferential direction grooves 20A may be appropriately set according to the performance required of the tire 10, such as water dispelling performance and steering stability performance. The shape and number of the width direction grooves may also, similarly, be appropriately set according to the performance required of the tire 10, such as water dispelling performance and steering stability performance.

The tire side portions 22 are each provided between the respective bead portions 12 and the tread portion 20. The tire side portions 22 extend in the tire radial direction and couple the bead portions 12 and the tread portion 20 together, and are configured so as to be able to bear load acting on the tire 10 during run-flat running.

In each of the tire side portions 22, the side reinforcement rubber 24 for reinforcing the tire side portion 22 is laid up at the tire width direction inside of the carcass 14. The side reinforcement rubber 24 is reinforcement rubber to enable running for a specific distance in a state in which the weight of the vehicle and the occupants is supported when the internal pressure of the tire 10 has decreased, such as due to puncturing. As an example in the present exemplary embodiment, the side reinforcement rubber 24 having a main component of rubber is laid up; however, there is no limitation thereto, and the side reinforcement rubber 24 may be formed of another material and, for example, the side reinforcement rubber 24 may be formed with a thermoplastic resin or the like as a main component.

Note that although in the present exemplary embodiment, the side reinforcement rubber 24 is formed from a single type of rubber material, there is no limitation thereto, and the side reinforcement rubber 24 may be formed from plural types of rubber material. Moreover, as long as the side reinforcement rubber 24 has a rubber material as a main component, other materials may be included, such as filler, short fibers, or resin. Moreover, in order to raise the durability during run-flat running, a rubber material having a JIS hardness of from 70 to 85, as measured at 20°C using a durometer tester, may be included as the rubber material configuring the side reinforcement rubber 24. Moreover, a rubber material may be included having a physical property of a loss coefficient tan δ of 0.1 or lower, as measured using a viscosity spectrometer (for example a spectrometer manufactured by Toyo Seiki Seisaku-sho, Ltd.) under conditions of frequency 20 Hz, initial strain 10%, dynamic strain ± 2%, and temperature 60°C.

Each of the side reinforcement rubbers 24 extends in the tire radial direction along the inner face of the carcass 14, is shaped with a thickness that decreases toward the bead core 26 side and toward the tread portion 20 side and is, for example, formed in a substantially crescent moon shape. The thickness referred to here means a length measured along a normal line to the carcass 14, in a state in which the tire 10 has been fitted to the standard rim 30 and has an internal pressure of the standard air pressure. The side reinforcement rubbers 24 may be joined together at the tire equatorial plane.

An inner liner, not illustrated in the drawings, is laid up at the internal face of the side reinforcement rubber 24, so as to span from one of the bead portions 12 to the other of the bead portions 12. As an example in the present exemplary embodiment, an inner liner having a main component of a butyl rubber is laid up; however, there is no limitation thereto, and an inner liner having a main component of another rubber material or a resin may be laid up. Note that although in the present exemplary embodiment, a single layer of the side reinforcement rubber 24 is sandwiched between the inner liner and the carcass 14, there is no limitation thereto. For example, a separate carcass may be laid up between the inner liner and the carcass 14, in a segmented configuration of the side reinforcement rubber 24.

Moreover, in the side reinforcement rubber 24, a lower end portion 24A on the bead core 26 side of the side reinforcement rubber 24 overlaps with the bead filler 28 present on the other side of the carcass 14, and an upper end portion 24B on the tread portion 20 side of the side reinforcement rubber 24 overlaps with the inclined belt layer 16 present on the other side of the carcass 14. When each of the side reinforcement rubbers 24 is projected along the tire radial direction, an overlap width P of the overlapping between each of the side reinforcement rubbers 24 and the reinforcement cord layer 18 is set to a length of 7.5% of the section height SH, or greater. As an example in the present exemplary embodiment, the overlap width P is set to a length of 7.5% of the section height SH.

A thickness GB of the side reinforcement rubber 24 at a central point Q between the end portion 28A of the bead filler 28 and the lower end portion 24A of the side reinforcement rubber 24 is set so as to be 50% of a maximum thickness GA of the side reinforcement rubber 24, or less. As an example in the present exemplary embodiment, the thickness GB of the side reinforcement rubber 24 is set at 30% of the maximum thickness GA. Making GB a thickness of 50% of GA or less enables a configuration to be achieved in which cracking of the side reinforcement rubber 24 is not liable to develop, even in cases in which a buckling phenomenon has occurred in the tire side portion 22.

Moreover, in a state in which the tire 10 is fitted to the standard rim 30 with an internal pressure of the standard air pressure, a height LH from the respective lower end portion 24A of the side reinforcement rubber 24 to a leading end of the respective bead portion 12 is preferably set in a range of from 50% to 80% of a height BH of the bead filler 28. As an example in the present exemplary embodiment, the height LH is set to 65% of the height BH. This is because it becomes difficult to secure durability during run-flat running if the height LH is higher than 80% of the height BH, and because there is a deterioration in ride comfort if the height LH is less than 50% thereof.

Taking a tread width D as the distance in the tire width direction between ground contact ends T of the tread portion 20 under maximum load capacity in a state in which the tire 10 has been fitted to the standard rim 30 with an internal pressure of the standard air pressure, in the present exemplary embodiment, the length of the inclined belt layer 16 along the tire width direction is set in a range of from 90% to 115% of the tread width D. Forming it shorter than 90% of the tread width D makes it difficult to secure rigidity of the tread portion 20, and longer than 115% of the tread width D causes a deterioration in ride comfort, thus it is preferable for setting to be made in the above range. The maximum load capacity referred to here indicates the maximum load capacity as listed in the 2013 edition of the Year Book of the Japan Automobile Tire Manufactures Association in Japan (JATMA).

There is no rim guard (rim protector) provided due to the present exemplary embodiment being applied to a tire 10 having a high section height SH; however, a rim guard may be provided.

### Operation and Advantageous Effects

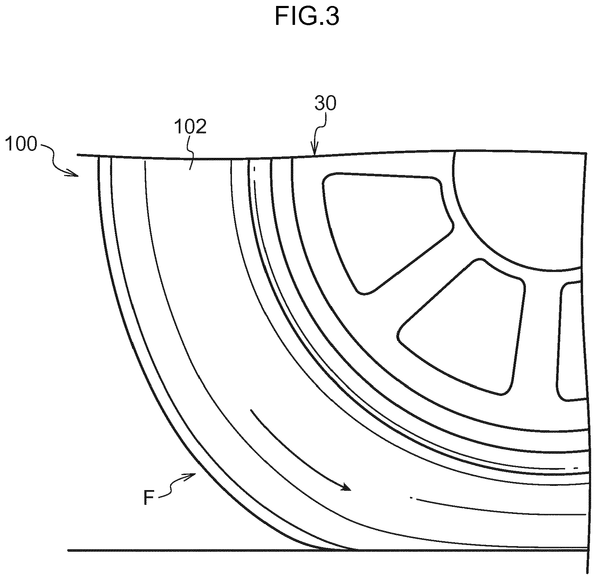

Next, explanation follows regarding operation of the tire 10 of the present exemplary embodiment, through explaining a buckling phenomenon that occurs at the tire side portion on a vehicle turn inside. In the following explanation, a tire 100 illustrated in Fig. 3, is a tire 100 of a Comparative Example not including the reinforcement cord layer 18 according to the present exemplary embodiment, and that has been mounted to the standard rim 30.

As illustrated in Fig. 3, a ground contact portion of the tire 100 is in a greatly distorted state during run-flat running. When a slip angle (SA) is input in this state, for example by cornering, the ground contact portion of the tire 100 is squashed, the distortion of the tire 100 increases, and the belt diameter of a tread-in side portion F increases due to this distortion propagating toward the progression direction front side of the tire 100 (note that the arrow in Fig. 3 indicates the tire rotation direction). As a result, tensile force on the bead portions toward the tire radial direction outside becomes larger, and, together with a buckling phenomenon, in which the tire side portion 102 positioned at the vehicle turn inside bends by folding in toward the inside of the tire 100, sometimes a phenomenon (rim detachment) occurs in which the bead portion detaches from the standard rim 30.

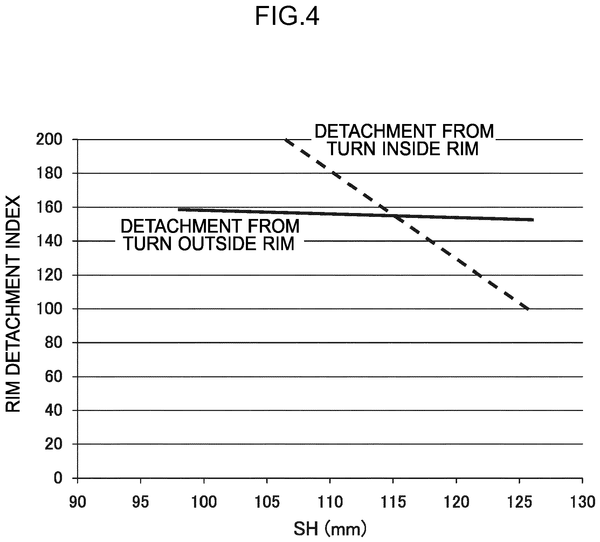

As illustrated in Fig. 4, it has been confirmed that rim detachment at the turn inside is liable to occur for a tire having a section height SH of 115 mm, or greater. The graph illustrated in Fig. 4 is from an investigation into a rim detachment index against section height SH when employing a run-flat radial tire of size 215/60R17. The higher the numerical value in the rim detachment index, the less liable rim detachment is to occur. According to Fig. 4, rim detachment is more liable to occur at the turn outside of a tire for tires having a section height SH of less than 115 mm, and rim detachment is more liable to occur at the turn inside of a tire for tires having a section height SH of 115 mm, or greater. It is apparent from this result that it is important to suppress rim detachment at the turn inside for tires having a section height SH of 115 mm, or greater. Note that there is no particular upper limit to the height of the section height SH, and it is, for example, 155 mm or lower.

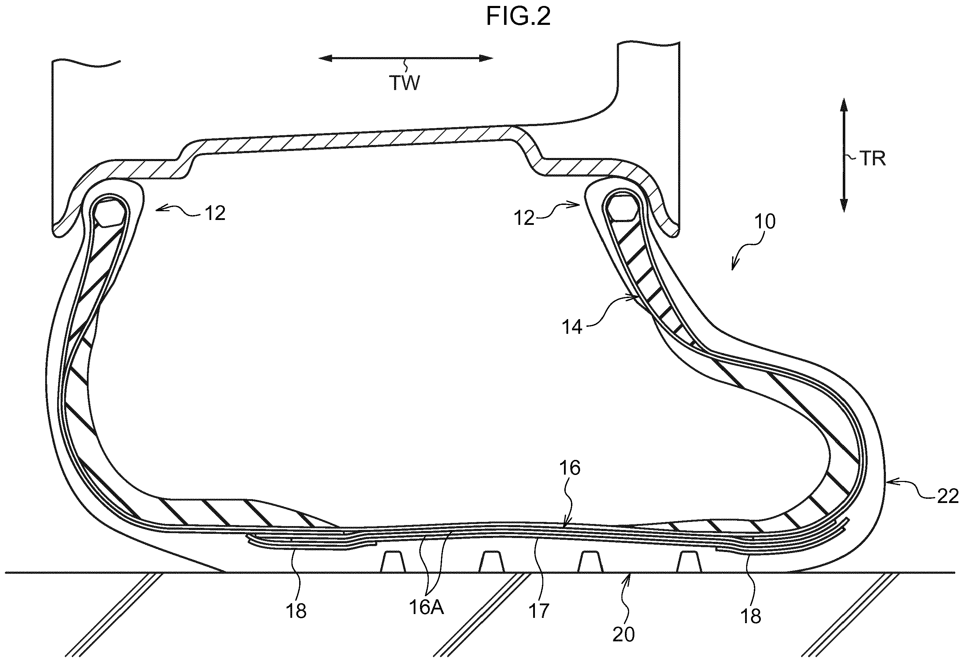

As illustrated in Fig. 1, in the tire 10 according to the present exemplary embodiment, the reinforcement cord layer 18 provided at both end portions of the tread portion 20 has an overlap width of a length of 7.5% of the section height SH when the side reinforcement rubber 24 is projected along the tire radial direction, or greater. The rigidity is thereby raised for both end portions of the tread portion 20, which act as the origin for a buckling phenomenon, and bending of the shoulder portion becomes less liable to occur. Thus even in cases in which a slip angle (SA) is input to the tire 10 during run-flat running, as illustrated in Fig. 2, the tire side portion 22 does not fold by bending in toward the inside of the tire 10, enabling a buckling phenomenon to be suppressed from occurring.

Moreover, the reinforcement cord layer 18 is formed by cord that is inclined to the tire circumferential direction with an angle of inclination of from 60 degrees to 90 degrees. This thereby enables the bending rigidity of shoulder portions to be made higher than cases employing cord at an angle of inclination to the tire circumferential direction of less than 60 degrees, and a buckling phenomenon can be made less liable to occur. This thereby enables prevention of rim detachment, in which, for example, the bead portion 12 is pulled toward the tire radial direction outside due to a buckling phenomenon, and, as a result, the bead portion 12 detaches from the standard rim 30.

Moreover, due to the lower end portion 24A of the side reinforcement rubber 24 overlapping with the bead filler 28, the rigidity of the tire side portion 22 is increased, enabling the durability to be improved during run-flat running. Moreover, the end portion 28A of the bead filler 28 is provided further to the tire radial direction inside than the maximum width position of the tire 10, and so the rigidity of the tire side portion 22 does not become too high.

Moreover, the thickness GB of the side reinforcement rubber 24 at the center point Q in Fig. 1 is a thickness of 50% of the maximum thickness GA of the side reinforcement rubber 24 or less. This thereby shortens the distance from the carcass 14 to the inside face of the side reinforcement rubber 24 at the center point Q, enabling the tensile stress acting at the inside face of the side reinforcement rubber 24 to be lowered. This thereby enables damage to the side reinforcement rubber 24 to be suppressed when a buckling phenomenon occurs.

As described above, providing the reinforcement cord layer 18 according to the present exemplary embodiment in the region described above enables a buckling phenomenon to be effectively suppressed from occurring, even in a tire 10 having a section height SH of 115 mm, or greater.

Note that in the present exemplary embodiment, the reinforcement cord layer 18 is provided at both end portions of the tread portion 20. Rim detachment is more liable to occur at the tire mounting direction inside due to vertical loading on the tire increasing at the turn outside due to a moment arising from centrifugal force when the tire 10 that punctured is on the turn outside. Adopting the countermeasures described above enables rim detachment to be suppressed from occurring. Moreover, the reinforcement cord layer 18 may be formed from plural layers. The rim detachment suppression effect can be raised even more in such cases.

### Test Examples

In order to confirm the advantageous effects of the run-flat radial tire according to the present invention, run-flat radial tires of the following Examples 1 to 7, and run-flat radial tires of Comparative Example 1 and Comparative Example 2 that do not fall within the present invention, were prepared and the following tests were performed.

Explanation first follows regarding the run-flat radial tires of Examples 1 to 7 employed in the tests, and regarding the run-flat radial tires of the Comparative Example 1 and the Comparative Example 2 employed in the tests. The size of all of the run-flat radial tires employed in the tests was 215/60R17, and the substance of the reinforcement cord layer was steel. A similar structure to that of the tire 10 of the present exemplary embodiment was employed for the run-flat radial tires of Examples 1 to 7, and for the run-flat radial tires of the Comparative Example 1 and the Comparative Example 2, with the tires having different respective parameters for the reinforcement cord layer.

Note that the run-flat radial tire of Comparative Example 1 is a radial tire having an overlap width in the tire width direction between each of the side reinforcement rubbers and the reinforcement cord of less than 7.5% (specifically, 4.0%) of the section height SH. Moreover, the run-flat radial tire of the Comparative Example 2 is a tire having an angle of inclination of the reinforcement cord layer to the tire circumferential direction of less than 60 degrees (specifically, 50 degrees). The various numerical values of the run-flat radial tires of Examples 1 to 7, and Comparative Example 1 and Comparative Example 2, are as listed in Table 1. In the following Table 1 and Table 2, "lay-up location (tire width direction)" indicates either a configuration in which the reinforcement cord layer is laid up at both end portions (shoulder portions) of the tread portion alone, or a configuration not falling within the scope of the present invention in which the reinforcement cord layer is laid up so as to span across the tread portion entirely. Moreover, "position S from ground contact end T" indicates a length in the tire width direction from a ground contact end T to an end portion of the reinforcement cord layer on the tire width direction outside. Negative values indicate cases in which the end portion of the reinforcement cord layer is positioned further to the tire width direction outside than the ground contact end T, and positive values indicate cases in which the end portion of the reinforcement cord layer is positioned further to the tire width direction inside than the ground contact end T (see Fig. 1).

In the tests, first the test tires were fitted to a standard rim as specified by JATMA, mounted to a vehicle without inflating with air (at an internal pressure of 0 kPa), and run-in for a distance of 5 km at a speed of 20 km/h. Then test tires were introduced at a specific speed to a curving road having a radius of curvature of 25 m, and stopped at a position of 1/3 of a lap of the curving road, with this repeated twice in succession (a J-turn test). The turning acceleration was then raised and retesting performed in cases in which the bead portions did not detach from the rim.

The turning acceleration when a bead portion of Comparative Example 1 detached from a rim was taken as a reference value (100), and the turning acceleration when each of the bead portions of Examples 1 to 7 and the Comparative Example 2 detached from a rim are shown as an index in the "rim detachment index" column of Table 1 and Table 2. The "rim detachment index" expresses as an index the turning acceleration when rim detachment occurred for each bead portion, with the larger the result the better the result indicated. Moreover, the weight of each of the test tires was measured, and, taking the weight of the Comparative Example 1 as the reference value (100), the weight for each of the tires from Examples 1 to 7 and Comparative Example 2 was expressed as an index in the "rim detachment index" column of Table 1 and Table 2. In the "weight index", smaller values indicate lower weights. The results of the Comparative Example 1, Example 1 to Example 3, and Reference Example 4 are shown in Table 1 below, and the results of the Comparative Example 2 and Example 5 to Example 7 are shown in Table 2 below.

**Table 1**

| | | Comparative Example 1 | Example 1 | Example 2 | Example 3 | Reference Example 4 |
|---|---|---|---|---|---|---|
| Reinforcement Cord Layer | Lay-Up Location (Tire Width Direction) | Shoulder Portions | Shoulder Portions | Shoulder Portions | Shoulder Portions | Entire |
| | Length In Tire Width Direction (mm) | 30 | 35 | 45 | 49 | 180 |
| | Position S From Ground Contact End T (mm) | 10 | 5 | -5 | -9 | -5 |
| | Overlap Width P With Side Reinforcement Rubber (mm) | 5 | 10 | 19 | 24 | 19 |
| | Angle Of Inclination To Tire Circumferential Direction (Degrees) | 90 | 90 | 90 | 90 | 90 |
| | P/Section Height SH (%) | 4.0 | 7.5 | 15.0 | 19.0 | 15.0 |
| Results | Rim Detachment Index | 100 | 101 | 104 | 105 | 105 |
| | Weight Index | 100 | 100 | 101 | 102 | 105 |

As illustrated in Table 1, the angle of inclination to the tire circumferential direction of the reinforcement cord layer of each of the Comparative Example 1, Examples 1 to 3 and Reference Example 4 was set to 90 degrees. Moreover, it was confirmed that, when projected along the tire radial direction, the larger the overlap width P of the side reinforcement rubber with the reinforcement cord layer, the better the result of the rim detachment index. This is thought to be because the larger the overlap width P, the higher the rigidity at the tread end, making it more difficult for the tire side portion to bend. Note that results are also similar in cases in which an organic fiber cord was employed in the reinforcement cord layer.

Moreover, in Reference Example 4, the weight index value is larger due to the being a configuration in which the reinforcement cord layer is provided all over, however, the rim detachment index is a better result than in the Comparative Example 1.

**Table 2**

| | | Comparative Example 2 | Example 5 | Example 6 | Example 7 |
|---|---|---|---|---|---|
| Reinforcement Cord Layer | Lay-Up Location (Tire Width Direction) | Shoulder Portions | Shoulder Portions | Shoulder Portions | Shoulder Portions |
| | Length In Tire Width Direction (mm) | 45 | 45 | 45 | 45 |
| | Position S From Ground Contact End T (mm) | -5 | -5 | -5 | -5 |
| | Overlap Width P With Side Reinforcement Rubber (mm) | 19 | 19 | 19 | 19 |
| | Angle Of Inclination To Tire Circumferential Direction (Degrees) | 50 | 60 | 70 | 80 |
| | P/ Section Height SH (%) | 15.0 | 15.0 | 15.0 | 15.0 |
| Results | Rim Detachment Index | 100 | 101 | 102 | 103 |
| | Weight Index | 101 | 101 | 101 | 101 |

As illustrated in Table 2, in each of the Comparative Example 1 and Examples 5 to 7, the overlap width P between the side reinforcement rubber and the reinforcement cord layer is set to 15.0% of the section height SH, and the greater the angle of inclination of the reinforcement cord layer to the tire circumferential direction, the better the result in the rim detachment index. This is thought to be because the bending rigidity of the shoulder portions increases the nearer the angle of inclination of the reinforcement cord layer is to 90 degrees, making a buckling phenomenon less likely to occur.

## Claims

1. A run- flat radial tire (10) comprising:
a carcass (14) spanning between a pair of bead portions (12);
a side reinforcement layer (24) provided to tire side portions (22) that respectively couple between the bead portions (12) and a tread portion (20);
a reinforcement cord layer (18) that is provided at a tire radial direction outside of the carcass (14), that comprises cord inclined to a tire circumferential direction at an angle of inclination of from 60 degrees to 90 degrees, the reinforcement cord layer (18) being laid up at both end portions of the tread portion (20) alone; and
an inclined belt layer (16) that is provided further to the tire radial direction inside of the tread portion (20) than the reinforcement cord layer (18),
**characterised in that**:
the tire (10) further comprises a cap layer (17) laid up at the tire radial direction outside of the inclined belt layer (16), the cap layer (17) covering the inclined belt layer (16) entirely;
the reinforcement layer (18) is laid up at the tire radial direction outside of the cap layer (17);
the reinforcement cord layer (18) is disposed such that, when the side reinforcement layer (24) is projected along a tire radial direction, an overlap width of the reinforcement cord layer (18) overlapping with the side reinforcement layer (24) is a length of 7.5% of a tire section height, or greater; and
the inclined belt layer (16) is inclined to the tire circumferential direction with an angle of inclination of from 15 degrees to 30 degrees.

2. The run-flat radial tire (10) of claim 1, wherein the reinforcement cord layer (18) is configured including cord of organic fiber.

3. The run-flat radial tire (10) of claim 1 or claim 2, wherein a tire cross-section height is 115 mm, or greater.

## Patentansprüche

1. Notlauf-Radialreifen (10), der Folgendes umfasst:
eine Karkasse (14), die sich zwischen einem Paar von Wulstabschnitten (12) spannt,
eine seitliche Verstärkungslage (24), die an Reifenseitenabschnitten (22) bereitgestellt wird, die jeweils zwischen den Wulstabschnitten (12) und einem Laufflächenabschnitt (20) verbinden,
eine Verstärkungskordlage (18), die auf einer in Reifenradialrichtung äußeren Seite der Karkasse (14) bereitgestellt wird, die Kord umfasst, der in einem Neigungswinkel von 60 Grad bis 90 Grad zu einer Reifenumfangsrichtung geneigt ist, wobei die Verstärkungskordlage (18) allein an beiden Enden des Laufflächenabschnitts (20) aufgelegt ist, und
eine geneigte Gürtellage (16), die weiter zu der in Reifenradialrichtung inneren Seite des Laufflächenabschnitts (20) als die Verstärkungskordlage (18) bereitgestellt wird,
**dadurch gekennzeichnet, dass**:
der Reifen (10) ferner eine Decklage (17) umfasst, die an der in Reifenradialrichtung äußeren Seite der geneigten Gürtellage (16) aufgelegt ist, wobei die Decklage (17) die geneigte Gürtellage (16) vollständig abdeckt,
die Verstärkungskordlage (18) an der in Reifenradialrichtung äußeren Seite der Decklage (17) aufgelegt ist,
die Verstärkungskordlage (18) derart angeordnet ist, dass, wenn die seitliche Verstärkungslage (24) entlang einer Reifenradialrichtung projiziert wird, eine Überlappungsbreite der Verstärkungskordlage (18), die mit der seitliche Verstärkungslage (24) überlappt, eine Länge von 7,5 % einer Reifenquerschnittshöhe oder mehr hat, und
die geneigte Gürtellage (16) mit einem Neigungswinkel von 15 Grad bis 30 Grad zu der Reifenumfangsrichtung geneigt ist.

2. Notlauf-Radialreifen (10) nach Anspruch 1, wobei die Verstärkungskordlage (18) so konfiguriert ist, dass sie Kord aus organischer Faser einschließt.

3. Notlauf-Radialreifen (10) nach Anspruch 1 oder 2, wobei eine Reifenquerschnittshöhe 115 mm oder mehr beträgt.

## Revendications

1. Bandage pneumatique radial à roulage à plat (10), comprenant :
une carcasse (14) s'étendant entre une paire de parties de talon (12) ;
une couche de renforcement latérale (24) agencée sur des parties latérales du bandage pneumatique (22) accouplées respectivement entre les parties de talon (12) et une partie de bande de roulement (20) ;
une couche de câblés de renforcement (18) agencée au niveau d'une partie externe, dans une direction radiale du bandage pneumatique, de la carcasse (14), comprenant des câblés inclinés par rapport à une direction circonférentielle du bandage pneumatique à un angle d'inclinaison compris entre 60 degrés et 90 degrés, la couche de câblés de renforcement (18) étant disposée seulement au niveau des deux parties d'extrémité de la partie de bande de roulement (20) ; et
une couche de ceinture inclinée (16) agencée davantage vers la partie interne, dans la direction radiale du bandage pneumatique, de la partie de bande de roulement(20) que la couche de câblés de renforcement (18) ;
**caractérisé en ce que** :
le bandage pneumatique (10) comprend en outre une couche de recouvrement (17) disposée au niveau d'une partie externe, dans la direction radiale du bandage pneumatique, de la couche de ceinture inclinée (16), la couche de recouvrement (17) recouvrant entièrement la couche de ceinture inclinée (16) ;
la couche de renforcement (18) est disposée au niveau de la partie externe, dans la direction radiale du bandage neumatique, de la couche de recouvrement (17) ;
la couche de câblés de renforcement (18) est disposée de sorte que, lorsque la couche de renforcement latérale (24) est projetée le long d'une direction radiale du bandage pneumatique, une largeur de chevauchement de la couche de câblés de renforcement (18) chevauchant la couche de renforcement latérale (24) correspond à une longueur de 7,5% ou plus d'une hauteur de section du bandage pneumatique ; et
la couche de ceinture inclinée (16) est inclinée par rapport à la direction circonférentielle du bandage pneumatique à un angle d'inclinaison compris entre 15 degrés et 30 degrés.

2. Bandage pneumatique radial à roulage à plat (10) selon la revendication 1, dans lequel la couche de câblés de renforcement (18) est configurée de sorte à inclure des câblés de fibres organiques.

3. Bandage pneumatique radial à roulage à plat (10) selon les revendications 1 ou 2, dans lequel une hauteur de section transversale du bandage pneumatique correspond à 115 mm ou plus.
